# EUROPEAN PATENT SPECIFICATION

(11) **EP 4 221 174 B1**
(45) Date of publication and mention of the grant of the patent: **04.06.2025**
(21) Application number: 22154268.1
(22) Date of filing: 31.01.2022
(51) Int. Cl.: H04N 1/00, G06F 3/12

(54) **USER INTERFACE FOR A PRINTING SYSTEM**
BENUTZERSCHNITTSTELLE FÜR EIN DRUCKSYSTEM
INTERFACE UTILISATEUR POUR UN SYSTÈME D'IMPRESSION

(43) Date of publication of application: 02.08.2023
(73) Proprietor: Canon Production Printing Holding B.V., 5914 HH Venlo (NL)
(72) Inventor: VAN STIPHOUT, Thijs A.P., Venlo (NL); RENET, Bas, Venlo (NL); LIND, Robert G.H., Venlo (NL); TRUIJEN, Ralf, Venlo (NL); LAUDY, Peter J.M., Venlo (NL); DE KORT, Werner J.C., Venlo (NL); GROAPA, Liviu G., Venlo (NL)
(74) Representative: Canon Production Printing IP Department

(56) References cited:
- US-A1- 2001 026 693
- US-A1- 2017 131 955
- US-A1- 2019 335 054
- US-A1- 2020 045 186

## Description

### BACKGROUND OF THE INVENTION

The invention relates to a user interface for displaying printing process information of a printing system.

The printing system may be for example a printing system or a copying system. Hereinafter the printing system may also be called "printer".

The term "relative humidity" may hereinafter be abbreviated to the term "humidity".

For instance, in a network system, a personal workstation of a user and the printing system are interconnected for printing digital print files that have been made in a workstation or for scanning documents at the printing system and transferring the digital scan data files from the printing system to a workstation. Digital image reproduction apparatuses can advantageously be used as printing systems and scanners. Such a digital image apparatus includes a scanner unit, a print unit, a memory, and a user interface integrated in the apparatus or remotely usable by an operator. The user interface is provided with an input capability and a display that permit a user to give operator control commands to the apparatus. Further, the printing system includes a network connection unit for coupling to a network for the purpose of communication with a digital external environment having at least a number of workstations of users, and a control unit connected to the scanner unit, printing system unit, memory and network connection unit, and, via the network connection unit, to the workstations and other printing systems in the network.

The printing system is placed in an environment which may be a building or a part of a building. The building may have a certain climate with respect to environmental values like temperature and humidity. Printing systems are known which have a temperature and humidity sensor attached on the outside of the printing system to register the temperature and humidity in the direct and near environment outside of the printing system.

US patent application 2017 / 131955 describes a registration of temperature and humidity outside the printer and a warning if allowable ranges are exceeded. The ranges are related and derived from the media which is going to be used by the printing system.

### SUMMARY OF THE INVENTION

It is an object of the present invention to provide a user interface appropriate for the printing system as mentioned here-above with respect to a temperature and humidity registration of the direct environment of the printing system, as defined in the appended claims.

To this end, said user interface comprises a first display item for displaying a value of a humidity of an environment of the printing system, a second display item for displaying a value of a temperature of the environment of the printing system and a third display item comprising an indicator for indicating that the displayed humidity value or the displayed temperature value is outside value ranges which are predetermined for a proper functioning of the printing system. Due to the first display item, the second display item and the third display item the operator of the printing system is immediately aware of the environmental values of the printing system and can take action if needed. The operator is aware that the printing system operates inside or outside the specified environmental humidity and temperature conditions. Outside the specified conditions, it is possible that the printing system does not operate well, e.g. the printing system does not reach a ready state. The present invention leads to service costs savings. The operator is now aware that the printing system is not operating according expectations due to environmental conditions that are out of the predetermined ranges. Instead of calling a service technician, the operator will improve the print engine environmental conditions for example by using heating, cooling and/or (de)humidification equipment.

According to an embodiment the user interface is a local user interface attached to or integrated in the outside of the printing system or a remote user interface wired or wirelessly connected to the printing system via a network.

According to a further embodiment the user interface is a mobile device.

According to an embodiment the environment of the printing system is at most a part of a building.

According to an embodiment the indicator is a colored ambient icon. The colors may be chosen to be signal colors like red, orange, yellow, blue or green.

According to an embodiment the user interface comprises a fourth display item for displaying an advice for the operator of the printing system when the third display item displays a humidity value or a temperature value which is outside the predetermined value ranges.

According to an embodiment the advice is an advice selected out of an advice for cooling down the environment of the printing system, an advice for warming up the environment of the printing system, an advice for humidification of the environment of the printing system, and an advice for dehumidification of the environment of the printing system.

The present invention further relates to a printing system comprising a user interface according to the invention, the printing system comprising an ambient sensor attached to the outside of the printing system in order to register values of a temperature and a humidity of the environment of the printing system and a print controller comprising a memory comprising predetermined value ranges for a temperature and a humidity needed for a proper functioning of the printing system, the print controller being configured to receive the registered values from the ambient sensor and to apply electronic signals to the user interface based on the predetermined value ranges in order to enable the first, second, and third display items to display respectively the registered humidity value, the registered temperature value and the indicator.

According to an embodiment the printing system comprises a plurality of components with functional specifications from which the predetermined values ranges are derived.

According to an embodiment the ambient sensor is capable of registering temperature and humidity. For example an RVT sensor may be used to measure a temperature and a humidity.

According to an embodiment the printing system comprises a user interface according to the invention, wherein the memory of the print controller comprises a data set of advices for the operator, each advice coupled to at least a value of temperature and/or humidity, and the print controller is configured to retrieve an advice from the data set in accordance with the registered humidity and temperature and to apply a corresponding electronic signal to the user interface in order to enable the fourth display item to display the retrieved advice.

According to an embodiment the print controller is configured to receive the registered humidity and temperature values in the memory of the print controller at regular time intervals.

According to an embodiment the print controller is configured to log the registered humidity and temperature values in the memory of the print controller at regular time intervals.

According to an embodiment the print controller is configured to receive the registered values from the ambient sensor during a running process of the printing system which is a starting up process, a printing process, a calibration process, a maintenance process or a shutdown process.

According to an embodiment the print controller is configured to continue the running process of the printing system despite a receipt of a registered value which lies outside the corresponding predetermined range.

The present inventio also relates to a method for a printing system according to the present invention having a user interface according to the present invention, the method comprising the steps of
- running a process on the printing system,
- registering values for a temperature and a humidity of an environment of the printer by means of an ambient sensor attached to an outside of the printing system,
- comparing the registered values with predetermined value ranges stored in the printing system,
- displaying the first, second and third display item on a user interface window of the user interface of the printing system in accordance with the comparison of the registered values with the predetermined ranges,
- keeping running the process running on the printing system, whether or not a registered value is out of the corresponding predetermined range.

Further scope of applicability of the present invention will become apparent from the detailed description given hereinafter. However, it should be understood that the detailed description and specific examples, while indicating preferred embodiments of the invention, are given by way of illustration only, since various changes and modifications will become apparent to those skilled in the art from this detailed description.

### BRIEF DESCRIPTION OF THE DRAWINGS

The present invention will become more fully understood from the detailed description given herein-below and the accompanying drawings which are given by way of illustration only, and thus are not limitative of the present invention, and wherein:
FIG. 1 shows schematically a network comprising a printing system in which the embodiments of the kinds of the user interface according to the invention are schematically shown;
FIG. 2 shows schematically a user interface window comprising the first, second and third display item according to the invention;
FIG. 3 shows schematically a user interface window comprising the fourth display item according to the invention; and
FIG. 4 is a flow diagram of a method according to the present invention.

### DETAILED DESCRIPTION OF PREFERRED EMBODIMENTS

A number of embodiments will now be described in conjunction with the drawings, in which same reference numerals refer to like elements.

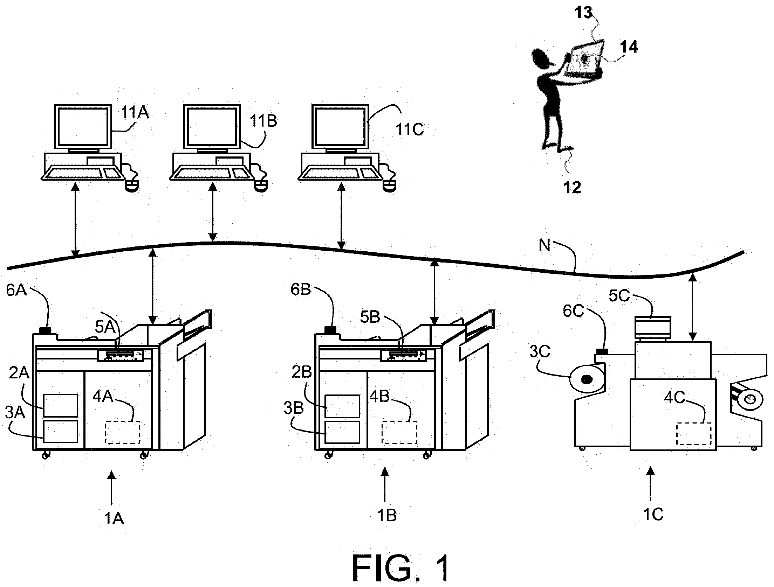

FIG. 1 shows three printers 1A, 1B, 1C which are connected to a network N.

FIG. 1 shows schematically a printing system 1A which comprises at least one input holder 2A, 3A for holding media which is intended to be used for printing of print jobs from the print job queue of the printing system 1A by means of a printing unit (not shown). The printing unit may comprise at least one print head for adhering marking material like ink or toner to the media. The media in the least one input holder 2A, 3A is transported to a print unit of the printing system 1A. The printing system 1A also comprises a local user interface 5A. While a specific printing system is shown and described, the disclosed embodiments may be used with other types of a printing system such as an inkjet printing system, an electrographic printing system, a cut sheet printing system, a roll fed printing system, etc.

The printing system 1B also comprises a local user interface 5B, and at least one input holder 2B, 3B.

Another printing system 1C is also connected to the network N. The printing system 1C comprises an input roll holder for holding an input roll 3C, a user interface 5C and a print controller 4C for controlling the printing process on the input roll 3C and maintaining a print job queue residing in the print controller 4C.

The printing systems 1A, 1B, 1C are digitally connected to a network N for bi-directional data signal transfer. The printing systems 1A, 1B, 1C comprise a print controller 4A, 4B, 4C respectively for controlling the printing process. The print controller 4A, 4B, 4C is a computer or server or a workstation, connected to the print engine of the printing system 1A, 1B, 1C respectively and connected to the digital environment of the printing system, for example the network N for transmitting a submitted print job to the printing system. In FIG. 1 the print controllers 4A, 4B, 4C are positioned inside the printing systems 1A, 1B, 1C respectively, but the print controllers may also be positioned outside the printing systems 1A, 1B, 1C in connection with the network N, for example in at least one of the workstations 11A, 11B, 11C. A print engine of the printing system 1A, 1B, 1C comprises a print head or print assembly for ejecting and/or fixing marking material to media and a paper path for transporting the media from the input holders 2A, 2B, 3A, 3B, 3C to the print head or print assembly. The print head or print assembly may be an inkjet print head, a direct imaging toner assembly or an indirect imaging toner assembly. While a media type is transported along the paper path, the media type receives the marking material from the print head or print assembly before the printed media is output in an output holder.

An operator 12 present in the neighbourhood of the printing systems 1A, 1B, 1C or even in another building than the printing systems 1A, 1B, 1C may use a remote wireless user interface 13 displaying printer processing information 14 of the printers 1A, 1B, 1C. The local user interfaces 5A, 5B, 5C and the remote user interface 13 are suitable for displaying user interface windows for controlling the print job queue residing in the print controller 4A, 4B, 4C respectively. The local user interfaces 5A, 5B, 5C and the wireless remote user interfaces 13 are suitable for displaying the environmental data according to the invention, e.g. the first display item of humidity, the second display item of temperature and the third display item of an indicator according to the present invention. In a further embodiment the user interface window displays the fourth display item of an advice for the operator of the printers 1A, 1B, 1C. In another embodiment a computer in the network N has a wired (or even wireless) remote user interface for displaying and controlling the print job queue and the environmental data of the printing systems 1A, 1B, 1C like the work stations 11A, 11B, 11C in FIG. 1.

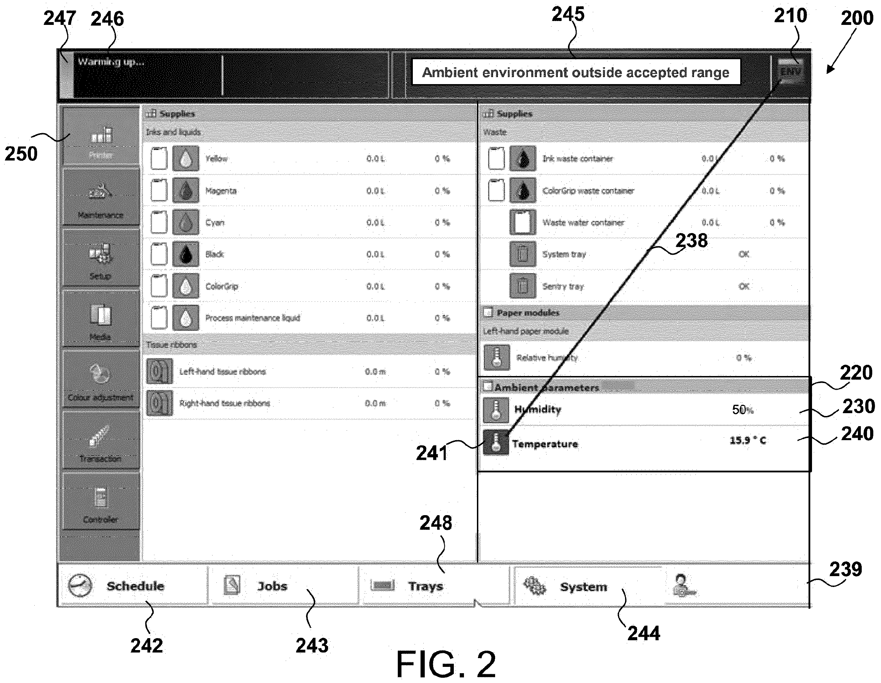

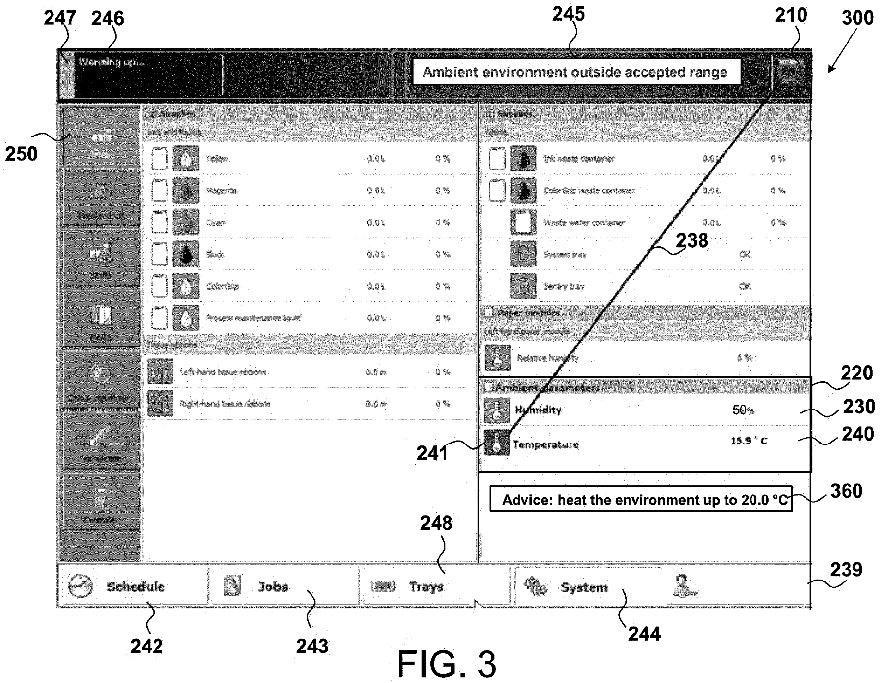

The printing systems 1A, 1B, 1C comprise ambient sensors 6A, 6B, 6C respectively attached to the outside of the printing systems 1A, 1B, 1C respectively. The ambient sensor 6A, 6B, 6C are capable of registering and measuring values of a temperature and a humidity of the environment of the printing system 1A, 1B, 1C. The print controller 4A, 4B, 4C comprises a memory comprising predetermined value ranges for a temperature and a humidity needed for a proper functioning of the printing system 1A, 1B, 1C. The print controller 4A, 4B, 4C is configured to receive the registered values from the ambient sensor 6A, 6B, 6C and to apply electronic signals to the user interface 5A, 5B, 5C, 13 based on the predetermined value ranges to show the registered values in a user interface window as shown in FIG. 2 and FIG. 3.

FIG. 2 shows an example of a user interface window 200 of a user interface for the printing system 1A according to the present invention. In an alternative embodiment part of the functionality - like buttons - of this user interface window is designed as hardware buttons near the user interface window 200. The user interface window 200 may be opened at the local user interface 5A in FIG. 1 and shows a representation of the print job queue residing in the print controller 4A in FIG. 1.

The user interface 200 comprise a top bar which is always visible on the user interface window 200. The top bar comprises a coloured icon 247 for indicating the overall state of the printer. In this example the printer is warming up as indicated by the message 246 and the coloured icon 247 is blue. The top bar comprises a message area 245 for showing messages to the operator. The top bar comprises a signalling icon 210 for indicating a special state of the printer. In this example the signalling icon 210 is coloured - it may blink - and contains a small text. The colour of the icon and the text together determine a special state of the printer. In this example the colour of the icon is red and the text is "ENV". The red colour and the text "ENV" indicate that at least one of the ambient parameter values is out of range. The connection between the signalling icon and the ambient parameter which is out of range is in FIG. 2 indicated by a line 238 between the signalling icon and the ambient parameter which value is out of range. The line is for educational purposes and not shown on the user interface window 200 when in use. According to an embodiment the user interface is configured to navigate to a panel 220 of the user interface window 200 when the signalling icon 210 is pressed. The panel 220 shows more information regarding the environmental parameters.

The user interface window 200 comprises a left bar with a plurality of buttons for operator options. The left bar is always visible in the user interface window 200. In this example the button 250 labelled with "Printer" is selected.

The user interface window 200 comprises a lower bar 239 with a button 242 for access to a job schedule, a button 243 for access to a print job queue, a button 248 for access to the tray for holding media and a button 244 for access to system settings and parameters. The button 244 for access to the system settings and parameters is selected to show a panel for a state of the supplies like ink and liquids, a panel for a state of tissue ribbons, a panel for a state of waste of the supplies, and a panel for a state of the paper modules and a panel 220 for a state of the ambient parameters 230, 240.

A first ambient parameter 230 is a humidity percentage. A second ambient parameter 240 is a temperature. The values of the ambient parameters 230, 240 are shown in the panel 220. In this example, the humidity has a percentage of 50 % and the temperature value is 15.9 °C. Icons 241 are shown in the panel 220 for each ambient parameter. The icons 241 may have different colours. In this example the icon for the humidity has a blue colour meaning that the 50 % humidity is not out of range and the icon 241 for the temperature has a red colour meaning that the temperature value of 15.9 °C is out of range.

The ranges for the ambient parameter values are predetermined and stored in the memory of the printer controller. An example of a predetermined relative humidity range is a range from 40 % to 60 %. An example of a predetermined temperature range is a range from 20.0 °C to 25.0 °C.

The ranges are predetermined by taking into account the specifications of the printer components which proper functioning is dependent on the ambient parameter values. Examples of such printer components are a print box comprising printheads, an ink unit and a maintenance unit inside which can probably functioning by controlled print box conditions which are depending on the ambient situation. Proper functioning means i.e. prevent drying in of ink in printheads, right cleaning/wiping during maintenance etc.

When a red ambient icon 230, 240 is shown, according to an embodiment of the invention the printer is not stopped. The print process like warming up, printing, scanning, calibrating, shutting down etc. which is currently occurring is not stopped, but continued. This is advantageous, since the operator is in control. The operator can deliberately decide to continue because it may be difficult to change the environment conditions and the printer behavior is acceptable.

The user interface window 200 of FIG. 2 is displayed on the user interface 5A of printer 1A, but a user interface window comprising environmental information and indicators may also be shown on a mobile device 13 like a tablet computer or a mobile phone in a reduced format. Users of a mobile may also receive notifications on their mobile device when the environmental parameter values are out of the acceptable range. Also the user interface window 200 may be shown on the computer 11A, 11B, 11C connected to the printer 1A, 1B, 1C via the network N. The user interface window 200 may also be part of a web based application which users can access remotely in a browser application.

FIG. 3 shows a user interface window 300 according to the present invention. The user interface window is similar to the user interface window 200, but now contains an advice area 360 for displaying an advice for the operator when at least one of the environmental parameter values are out of range. In this example the relative humidity is 50 % which is inside the acceptable range of 40 % - 60 %. The temperature of the environment of the printer is 15.9 °C. This temperature is outside of the acceptable range of 20.0 °C - 25.0 °C. Therefore the advice for the operator which is shown in the advice area 360 is to heat up the environment of the printer up to the lower bound temperature of 20.0 °C. The environment of the printer may be a chamber or production room in which the printer is positioned or any other part of a building which may be temperature and/or humidity controlled by corresponding equipment.

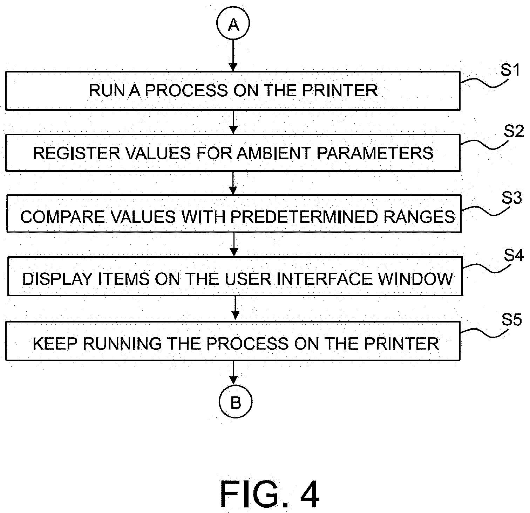

FIG. 4 shows a flow diagram of an embodiment of a method according to the invention. The method is suitable for a printing system according to the invention which has a user interface according to the invention.

The method starts in a starting point A which leads to a first step S1.

In the first step S1 a process is running on the printing system. The process is for example a starting up process, a printing process, a scanning process, a calibration process, a proofing process, a shutdown process, a media transfer process, etc.

In a second step S2 values for a temperature and a humidity of an environment of the printer are registered by means of an ambient sensor attached to an outside of the printing system.

In a third step S3 the registered values are stored in memory of the print controller and compared with predetermined value ranges stored in the memory.

In a fourth step S4 the first, second and third display item according to the invention are displayed on a user interface window of the user interface of the printing system. In a further embodiment the fourth display item being an advice for the operator is displayed on a user interface window of the user interface of the printing system.

In a fifth step S5 the process is kept running on the printing system, whether or not a registered value is out of the corresponding predetermined range.

In principle, the method is a continuous process of registering, comparing and displaying as long as the printing system is operational.

The method ends in an end point B.

The invention being thus described, it will be obvious that the same may be varied in many ways. Such variations and modifications as would be obvious to one skilled in the art are intended to be included within the scope of the following claims.

## Claims

1. A printing system comprising a user interface (5A, 5B, 5C, 13) for displaying printing process information (14) of a printing system (1A, 1B, 1C), wherein the user interface (5A, 5B, 5C, 13) comprising a first display item (230) for displaying a value of a relative humidity of an environment of the printing system, a second display item (240) for displaying a value of a temperature of the environment of the printing system and a third display item (210) comprising an indicator for indicating whether or not the displayed relative humidity value or the displayed temperature value is outside value ranges which are predetermined for a proper functioning of the printing system,
wherein the printing system (1A, 1B, 1C) comprises an ambient sensor (6A, 6B, 6C) attached to the outside of the printing system in order to register values of a temperature and a relative humidity of the environment of the printing system and a print controller (4A, 4B, 4C) comprising a memory comprising predetermined value ranges for a temperature and a relative humidity needed for a proper functioning of the printing system,
wherein the print controller is configured to receive the registered values from the ambient sensor and to apply electronic signals to the user interface based on the predetermined value ranges in order to enable the first, second, and third display items to display respectively the registered relative humidity value, the registered temperature value and the indicator, and
wherein the printing system comprises a plurality of components with functional specifications from which the predetermined values ranges are derived.

2. A printing system according to claim 1, wherein the user interface is a local user interface attached to or integrated in the outside of the printing system or a remote user interface wired or wirelessly connected to the printing system via a network.

3. A printing system according to claim 2, wherein the user interface is a mobile device.

4. A printing system according to any one of the preceding claims, wherein the environment of the printing system is at most a part of a building.

5. A printing system according to any one of the preceding claims, wherein the indicator is a colored ambient icon.

6. A printing system according to any one of the preceding claims, wherein the user interface comprises a fourth display item for displaying an advice for the operator of the printing system when the third display item displays a relative humidity value or a temperature value which is outside the predetermined value ranges.

7. A printing system according to claim 6, wherein the advice is an advice selected out of an advice for cooling down the environment of the printing system, an advice for warming up the environment of the printing system, an advice for humidification of the environment of the printing system, and an advice for dehumidification of the environment of the printing system.

8. A printing system according to claim 1, wherein the ambient sensor is capable of registering temperature and relative humidity.

9. A printing system according to claim 8, the printing system comprising a user interface according to claim 6 or 7, wherein the memory of the print controller comprises a data set of advices for the operator, each advice coupled to at least a value of temperature and/or relative humidity, and the print controller is configured to retrieve an advice from the data set in accordance with the registered relative humidity and temperature and to apply a corresponding electronic signal to the user interface in order to enable the fourth display item to display the retrieved advice.

10. A printing system according to any one of claims 8 - 9, wherein the print controller is configured to receive the registered relative humidity and temperature values in the memory of the print controller at regular time intervals.

11. A printing system according to any one of claims 8 - 10, wherein the print controller is configured to receive the registered values from the ambient sensor during a running process of the printing system which is a starting up process, a printing process, a calibration process, a maintenance process or a shutdown process.

12. A printing system according to claim 11, wherein the print controller is configured to continue the running process of the printing system despite a receipt of a registered value which lies outside the corresponding predetermined range.

13. A method for a printing system according to any one of claims 1 - 12 the method comprising the steps of
- running a process on the printing system,
- registering values for a temperature and a relative humidity of an environment of the printer by means of an ambient sensor attached to an outside of the printing system,
- comparing the registered values with predetermined value ranges stored in the printing system,
- displaying the first, second and third display item on a user interface window of the user interface of the printing system in accordance with the comparison of the registered values with the predetermined ranges,
- keeping running the process, whether or not a registered value is out of the corresponding predetermined range.

## Patentansprüche

1. Drucksystem mit einer Benutzerschnittstelle (5A, 5B, 5C, 13) zum Anzeigen von Druckprozessinformationen (14) eines Drucksystems (1A, 1B, 1C), wobei die Benutzerschnittstelle (5A, 5B, 5C, 13) ein erstes Anzeigeelement (230) zum Anzeigen eines Wertes einer relativen Feuchtigkeit einer Umgebung des Drucksystems umfasst, ein zweites Anzeigeelement (240) zum Anzeigen eines Wertes einer Temperatur der Umgebung des Drucksystems und ein drittes Anzeigeelement (210), das einen Indikator umfasst, der anzeigt, ob der angezeigte Wert der relativen Feuchtigkeit oder der angezeigte Temperaturwert außerhalb von Wertbereichen liegt, die für ein ordnungsgemäßes Funktionieren des Drucksystems vorbestimmt sind oder nicht, wobei das Drucksystem (1A, 1B, 1C) einen Umgebungssensor (6A, 6B, 6C), der an der Außenseite des Drucksystems angebracht ist, um Werte einer Temperatur und einer relativen Feuchtigkeit der Umgebung des Drucksystems zu registrieren, und eine Drucksteuerung (4A, 4B, 4C) umfasst, die einen Speicher umfasst, der vorbestimmte Wertebereiche für eine Temperatur und eine relative Feuchtigkeit umfasst, die für ein ordnungsgemäßes Funktionieren des Drucksystems erforderlich sind,
wobei der Druckcontroller so konfiguriert ist, dass er die registrierten Werte vom Umgebungssensor empfängt und elektronische Signale auf der Grundlage der vorbestimmten Wertebereiche an die Benutzerschnittstelle anlegt, um das erste, zweite und dritte Anzeigeelement in die Lage zu versetzen, den registrierten relativen Feuchtigkeitswert, den registrierten Temperaturwert bzw. den Indikator anzuzeigen, und wobei das Drucksystem eine Vielzahl von Komponenten mit funktionalen Spezifikationen umfasst, aus denen die vorgegebenen Wertebereiche abgeleitet werden.

2. Ein Drucksystem nach Anspruch 1, wobei die Benutzerschnittstelle eine lokale Benutzerschnittstelle ist, die an der Außenseite des Drucksystems angebracht oder darin integriert ist, oder eine entfernte Benutzerschnittstelle, die über ein Netzwerk mit dem Drucksystem verkabelt oder drahtlos verbunden ist.

3. Ein Drucksystem nach Anspruch 2, wobei die Benutzerschnittstelle ein mobiles Gerät ist.

4. Ein Drucksystem nach einem der vorhergehenden Patentansprüche, wobei die Umgebung des Drucksystems höchstens ein Teil eines Gebäudes ist.

5. Ein Drucksystem nach einem der vorhergehenden Patentansprüche, wobei der Indikator ein farbiges Umgebungssymbol ist.

6. Drucksystem nach einem der vorhergehenden Patentansprüche, wobei die Benutzerschnittstelle ein viertes Anzeigeelement zur Anzeige eines Hinweises für den Bediener des Drucksystems umfasst, wenn das dritte Anzeigeelement einen relativen Feuchtigkeitswert oder einen Temperaturwert anzeigt, der außerhalb der vorgegebenen Wertebereiche liegt.

7. Drucksystem nach Anspruch 6, wobei der Ratschlag ein Ratschlag ist, der ausgewählt ist aus einem Ratschlag zur Abkühlung der Umgebung des Drucksystems, einem Ratschlag zur Erwärmung der Umgebung des Drucksystems, einem Ratschlag zur Befeuchtung der Umgebung des Drucksystems und einem Ratschlag zur Entfeuchtung der Umgebung des Drucksystems.

8. Drucksystem nach Anspruch 1, wobei der Umgebungssensor in der Lage ist, die Temperatur und die relative Luftfeuchtigkeit zu registrieren.

9. Drucksystem nach Anspruch 8, wobei das Drucksystem eine Benutzerschnittstelle nach Anspruch 6 oder 7 umfasst, wobei der Speicher der Drucksteuerung einen Datensatz von Ratschlägen für den Bediener umfasst, wobei jeder Ratschlag mit mindestens einem Wert der Temperatur und/oder der relativen Luftfeuchtigkeit gekoppelt ist, und die Drucksteuerung so konfiguriert ist, dass sie einen Ratschlag aus dem Datensatz in Übereinstimmung mit der registrierten relativen Luftfeuchtigkeit und Temperatur abruft und ein entsprechendes elektronisches Signal an die Benutzerschnittstelle anlegt, damit das vierte Anzeigeelement den abgerufenen Ratschlag anzeigen kann.

10. Drucksystem nach einem der Patentansprüche 8 - 9, wobei die Drucksteuerung so konfiguriert ist, dass sie die registrierten Werte für die relative Luftfeuchtigkeit und die Temperatur im Speicher der Drucksteuerung in regelmäßigen Zeitabständen empfängt.

11. Drucksystem nach einem der Patentansprüche 8 bis 10, wobei die Drucksteuerung so konfiguriert ist, dass sie die registrierten Werte vom Umgebungssensor während eines laufenden Prozesses des Drucksystems bei dem es sich um einen Startvorgang, einen Druckvorgang, einen Kalibrierungsvorgang, einen Wartungsvorgang oder einen Abschaltvorgang handelt.

12. Drucksystem nach Anspruch 11, wobei die Drucksteuerung so konfiguriert ist, dass sie den laufenden Prozess des Drucksystems trotz des Empfangs eines registrierten Wertes, der außerhalb des entsprechenden vorbestimmten Bereichs liegt, fortsetzt.

13. Verfahren für ein Drucksystem nach einem der Patentansprüche 1 - 12, wobei das Verfahren die folgenden Schritte umfasst
- einen Prozess auf dem Drucksystem ausführt,
- das Erfassen von Werten für eine Temperatur und eine relative Luftfeuchtigkeit der Umgebung des Druckers mit Hilfe eines Umgebungssensors, der an der Außenseite des Drucksystems angebracht ist,
- den Vergleich der registrierten Werte mit vorgegebenen, im Drucksystem gespeicherten Wertebereichen,
- Anzeige des ersten, zweiten und dritten Anzeigeelements auf einem Benutzerschnittstellenfenster der Benutzerschnittstelle des Drucksystems in Übereinstimmung mit dem Vergleich der registrierten Werte mit den vorbestimmten Bereichen,
- den Prozess weiterlaufen lassen, unabhängig davon, ob ein registrierter Wert außerhalb des entsprechenden vorgegebenen Bereichs liegt oder nicht.

## Revendications

1. Système d'impression comprenant une interface utilisateur (5A, 5B, 5C, 13) pour afficher des informations de processus d'impression (14) d'un système d'impression (1A, 1B, 1C), dans lequel l'interface utilisateur (5A, 5B, 5C, 13) comprend un premier élément d'affichage (230) pour afficher une valeur d'humidité relative d'un environnement du système d'impression, un deuxième élément d'affichage (240) pour afficher une valeur de température de l'environnement du système d'impression et un troisième élément d'affichage (210) comprenant un indicateur pour indiquer si la valeur d'humidité relative affichée ou la valeur de température affichée est en dehors des plages de valeurs qui sont prédéterminées pour un fonctionnement correct du système d'impression,
dans lequel le système d'impression (1A, 1B, 1C) comprend un capteur ambiant (6A, 6B, 6C) fixé à l'extérieur du système d'impression afin d'enregistrer les valeurs d'une température et d'une humidité relative de l'environnement du système d'impression et un contrôleur d'impression (4A, 4B, 4C) comprenant une mémoire comprenant des plages de valeurs prédéterminées pour une température et une humidité relative nécessaires au bon fonctionnement du système d'impression,
dans lequel le contrôleur d'impression est configuré pour recevoir les valeurs enregistrées du capteur ambiant et pour appliquer des signaux électroniques à l'interface utilisateur sur la base des plages de valeurs prédéterminées afin de permettre aux premier, deuxième et troisième éléments d'affichage d'afficher respectivement la valeur d'humidité relative enregistrée, la valeur de température enregistrée et l'indicateur, et
le système d'impression comprend une pluralité de composants avec des spécifications fonctionnelles à partir desquelles les plages de valeurs prédéterminées sont dérivées.

2. Système d'impression selon la revendication 1, dans lequel l'interface utilisateur est une interface utilisateur locale fixée ou intégrée à l'extérieur du système d'impression ou une interface utilisateur distante connectée par câble ou sans fil au système d'impression via un réseau.

3. Système d'impression selon la revendication 2, dans lequel l'interface utilisateur est un dispositif mobile.

4. Système d'impression selon l'une quelconque des revendications précédentes, dans lequel l'environnement du système d'impression est au plus une partie d'un bâtiment.

5. Système d'impression selon l'une quelconque des revendications précédentes, dans lequel l'indicateur est une icône d'ambiance colorée.

6. Système d'impression selon l'une quelconque des revendications précédentes, dans lequel l'interface utilisateur comprend un quatrième élément d'affichage pour afficher un conseil à l'intention de l'opérateur du système d'impression lorsque le troisième élément d'affichage affiche une valeur d'humidité relative ou une valeur de température qui se situe en dehors des plages de valeurs prédéterminées.

7. Système d'impression selon la revendication 6, dans lequel le conseil est un conseil sélectionné parmi un conseil pour refroidir l'environnement du système d'impression, un conseil pour réchauffer l'environnement du système d'impression, un conseil pour humidifier l'environnement du système d'impression, et un conseil pour déshumidifier l'environnement du système d'impression.

8. Système d'impression selon la revendication 1, dans lequel le capteur ambiant est capable d'enregistrer la température et l'humidité relative.

9. Système d'impression selon la revendication 8, le système d'impression comprenant une interface utilisateur selon la revendication 6 ou 7, dans lequel la mémoire du contrôleur d'impression comprend un ensemble de données de conseils pour l'opérateur, chaque conseil étant couplé à au moins une valeur de température et/ou d'humidité relative, et le contrôleur d'impression est configuré pour extraire un conseil de l'ensemble de données en fonction de l'humidité relative et de la température enregistrées et pour appliquer un signal électronique correspondant à l'interface utilisateur afin de permettre au quatrième élément d'affichage d'afficher le conseil extrait.

10. Système d'impression selon l'une des revendications 8 - 9, dans lequel le contrôleur d'impression est configuré pour recevoir les valeurs d'humidité relative et de température enregistrées dans la mémoire du contrôleur d'impression à intervalles de temps réguliers.

11. Système d'impression selon l'une des revendications 8 à 10, dans lequel le contrôleur d'impression est configuré pour recevoir les valeurs enregistrées du capteur ambiant au cours d'un processus de fonctionnement du système d'impression qui est un processus de démarrage, un processus d'impression, un processus d'étalonnage, un processus de maintenance ou un processus d'arrêt.

12. Système d'impression selon la revendication 11, dans lequel le contrôleur d'impression est configuré pour poursuivre le processus de fonctionnement du système d'impression malgré la réception d'une valeur enregistrée qui se situe en dehors de la plage prédéterminée correspondante.

13. Procédé pour un système d'impression selon l'une quelconque des revendications 1 à 12, le procédé comprenant les étapes suivantes
- l'exécution d'un processus sur le système d'impression,
- enregistrer les valeurs de température et d'humidité relative de l'environnement de l'imprimante au moyen d'un capteur ambiant fixé à l'extérieur du système d'impression,
- comparer les valeurs enregistrées avec des plages de valeurs prédéterminées stockées dans le système d'impression,
- afficher le premier, le deuxième et le troisième élément d'affichage sur une fenêtre de l'interface utilisateur du système d'impression en fonction de la comparaison des valeurs enregistrées avec les plages prédéterminées,
- en maintenant le processus, si une valeur enregistrée se situe ou non en dehors de la fourchette prédéterminée correspondante.
